# EUROPÄISCHE PATENTSCHRIFT

(11) **EP 0 514 514 B1**
(45) Veröffentlichungstag und Bekanntmachung des Hinweises auf die Patenterteilung: **31.08.1994**
(21) Anmeldenummer: 91920849.6
(22) Anmeldetag: 09.12.1991
(51) Int. Cl.: G02C 5/00, G02C 11/02

(54) **BRILLE**
PAIR OF SPECTACLES
LUNETTES

(30) Priorität: 11.12.1990 CH 3905/90
(43) Veröffentlichungstag der Anmeldung: 25.11.1992
(73) Patentinhaber: GRENDELMEIER, Alexander, CH-4663 Aarburg (CH)
(72) Erfinder: GRENDELMEIER, Alexander, CH-4663 Aarburg (CH)
(74) Vertreter: Tschudi, Lorenz
(86) Internationale Anmeldenummer: CH9100250
(87) Internationale Veröffentlichungsnummer: WO9210777

(56) Entgegenhaltungen:
- EP-A- 0 038 093
- DE-A- 3 121 877
- GB-A- 782 915
- US-A- 2 835 063
- US-A- 3 179 950
- US-A- 4 798 455

## Beschreibung

Die Erfindung betrifft eine Brille nach dem Oberbegriff des Anspruches 1.

Derartige Brillen sind in mannigfaltiger Weise bekannt (siehe z.B EP-A-0038093). Brillen erfüllen nicht nur den Zweck, Sehfehler des menschlichen Auges zu korrigieren, sondern sollen auch schmückend wirken. Die Ansprüche an die Ausgestaltung in Form und Farbe der Brille bzw. der Brillengestelle ist deshalb einem stetigen Wechsel unterworfen, entsprechend den Aenderungen, die die gesamte Modebranche dauernd erfährt.

Um immer die der Moderichtung entsprechende und passende Brille zur Hand zu haben, müssten verschiedene Modelle ständig zur Auswahl stehen, oder es müsste jeweils die passende Brille neu angeschafft werden, was aber kostenmässig einen grossen Aufwand bedeutet.

Die Aufgabe der Erfindung besteht demzufolge darin, den Aufbau der Brille derart zu gestalten, dass einzelne Teile austauschbar sind, und durch andere Teile, die andere Formen und Farben aufweisen, ersetzt werden können.

Erfindungsgemäss erfolgt die Lösung der Aufgabe nach der Kennzeichnung des Anspruches 1.

Weitere vorteilhafte Ausgestaltungen der Erfindung sind in den abhängigen Ansprüchen angegeben.

Das Anbringen eines von der Randfassung abstehenden Gleitteiles und einer am Brillengestell angebrachten Nut mit einer Passform zum Aufnehmen des Gleitteiles ermöglicht einen schnellen Wechsel der mit je einer Randfassung versehenen Gläser und eine sichere Verbindung zwischen Brillengestell und Randfassungen, was durch zusätzliche Schnappeinrichtungen zum Arretieren des Gleitteiles in der Nut noch unterstützt wird.

Eine weitere vorteilhafte Ausgestaltung der Erfindung wird dadurch erreicht, dass die Randfassung seitlich in das Brillengestell einschiebbar ist, wodurch ermöglicht wird, die Einschubweite und damit bei zwei Randfassungen den Abstand der beiden Randfassungen voneinander zu variieren.

Als sehr einfache Variante können die Mittel zum austauschbaren Befestigen der Randfassung am Brillengestell als Zapfen und am gegenüberliegenden Teil als entsprechende Bohrungen ausgeführt sein. Ein Anbringen von mehreren Bohrungen nebeneinander ermöglicht auch, den gegenseitigen Abstand von zwei Randfassungen zu variieren.

Mit einer derartigen Möglichkeit zur Variierung des gegenseitigen Abstandes zweier Randfassungen können sogar Brillengestelle verwendet werden, die keinen Nasenbügel aufweisen. Die Funktion des Nasenbügels wird in diesem Falle von den entsprechend ausgeformten Randfassungen übernommen. Durch die Verstellbarkeit des gegenseitigen Abstandes der beiden Randfassungen lässt sich eine Anpassung an die Gesichtsform des jeweiligen Brillenträgers zur Erreichung eines optimalen Sitzes der Brille vornehmen.

Das Austauschen der Randfassungen soll rasch und einfach erfolgen können. Um die Möglichkeit einer Verwechslung der linken und rechten Randfassung beim Auswechseln zu vermeiden, weisen die Randfassungen in vorteilhafter Weise entsprechende Gegenmittel auf. Diese können beispielsweise aus am Brillengestell angebrachten Nocken bestehen, die in eine entsprechende Oeffnung der Randfassung passen, wobei diese Nocken in vorteilhafter Weise auf der hinteren Seite des Brillengestells angebracht sind, so dass bei eingesetzter Randfassung von vorne weder Nocken noch entsprechende Oeffnungen sichtbar sind.

Zusätzlich zu den Randfassungen kann auch der Nasenbügel mit Mitteln versehen sein, zu denen das Brillengestell entsprechende Mittel aufweist, damit ein Auswechseln dieses Elementes auch vorgenommen werden kann. Je nachdem, ob nun die Randfassungen die Funktion des Nasenbügels übernehmen können oder nicht, kann dieser eingesetzt werden. Dabei können im Rahmen des Möglichen praktisch beliebige Formen und Farben gewählt werden. Im gleichen Sinne können auch die seitlich angebrachten Bügel mit Mitteln am Brillengestell befestigt sein, die ein leichtes Auswechseln unterschiedlich geformter und gefärbter Bügel zulässt.

Anhand der Figuren werden nachfolgend Ausführungsbeispiele der Erfindung näher beschrieben.

Es zeigen
- **Fig. 1**: eine Ansicht einer Brille mit Passform und Nut, bei welcher die Randfassungen im Brillengestell von vorne einsetzbar sind,
- **Fig. 2**: eine Schnittdarstellung entlang der Linie II-II nach der Fig. 1,
- **Fig. 3**: eine Ansicht einer Brille, bei welcher die Befestigungsmittel aus Zapfen und entsprechenden Oeffnungen bestehen,
- **Fig. 4**: eine Schnittdarstellung entlang der Linie IV-IV nach Fig. 3,
- **Fig. 5**: eine Ansicht einer Brille, bei welcher die Randfassungen seitlich ins Brillengestell einschiebbar sind,
- **Fig. 6**: eine Schnittdarstellung entlang Linie VI-VI nach Fig. 5,
- **Fig. 7**: eine Detailansicht des Einschiebeteils nach Fig. 5,
- **Fig. 8**: eine Schnittdarstellung entlang Linie VIII-VIII nach Fig. 7,
- **Fig. 9**: eine Ansicht einer axialen Befestigung mit Verdrehsicherung,
- **Fig. 10**: eine Ansicht einer Druckknopfbefestigung,
- **Fig. 11**: eine Schnittdarstellung durch Brillengestell und Randfassung mit Blende,
- **Fig. 12**: eine Ansicht einer Verbindungsstelle zwischen Brillengestell und Bügel, und
- **Fig. 13 und 14**: je eine Darstellung eines auswechselbaren Nasenbügels.

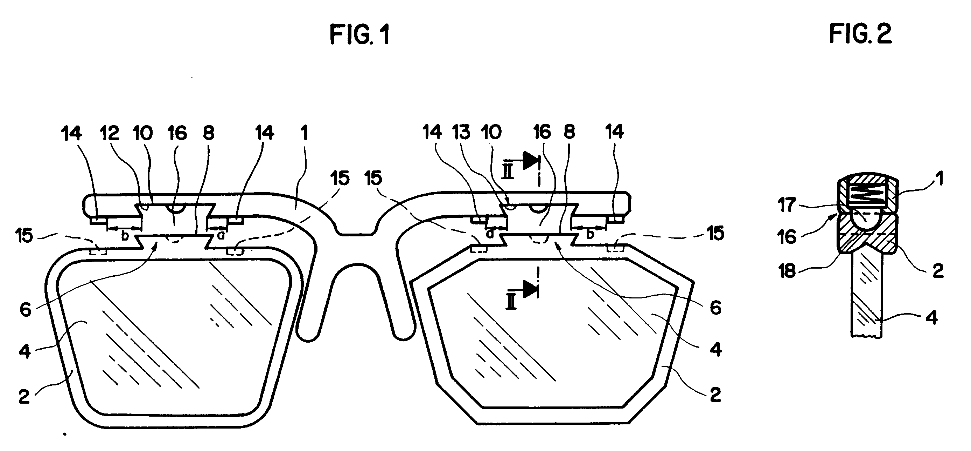

In Fig. 1 sind ein Brillengestell 1 und zwei austauschbare Randfassungen 2 dargestellt. In jede Randfassung 2 ist ein Brillenglas 4 eingesetzt. Bei den beiden Randfassungen 2 sind die ersten Mittel 6, welche das austauschbare Anordnen am Brillengestell 1 ermöglichen, als von den beiden Randfassungen 2 abstehende Gleitteile 8 in Form von Schwalbenschwänzen ausgebildet. Die entsprechenden zweiten Mittel 10 sind in Form einer Nut 12 in das Brillengestell 1 eingelassen, die passende Formen zum Aufnehmen der Gleitteile 8 aufweisen. Beidseits der Nut 12 verfügt das Brillengestell 1 an der dem Auge zugewandten hinteren Seite über je einen Nocken 14, der nur bis etwa in die Mitte des Brillengestelles 1 hineinragt. Die beiden Randfassungen 2 weisen je seitlich von den Gleitteilen 8 eine der Aufnahme des entsprechenden Nockens 14 dienende Ausnehmung 15 auf, die sich je nur etwa über die hintere Hälfte der beiden Randfassungen 2 erstreckt. Das Zusammenwirken des Nockens 14 und der Ausnehmung 15 dient einerseits als Festanschlag beim Einsetzen der beiden Randfassungen 2 im Brillengestell 1 und andererseits als Sicherung gegen Verdrehung der beiden Randfassungen 2 gegenüber dem Brillengestell 1.

Dadurch, dass der Abstand a der inneren Nocken 14 und der Abstand b der äusseren Nocken 14 von der jeweiligen Nut 12 unterschiedlich gross gewählt ist, ist ein Verwechseln der beiden Randfassungen 2 beim Einsetzen in das Brillengestell 1 nicht möglich. Damit die beiden Randfassungen 2 im Brillengestell 1 gehalten sind, weist das Brillengestell 1 zu jeder Randfassung 2 eine Schnappvorrichtung 16 auf, wie aus Fig. 2 ersichtlich ist. Diese Schnappvorrichtung 16 weist in bekannter Weise im wesentlichen eine im Brillengestell 1 federnd abgestützte Kugel 17 auf, die beim Einsetzen einer Randfassung 2 zurückweicht und dann in eine Vertiefung 18, die in der Randfassung 2 eingelassen ist, einschnappt.

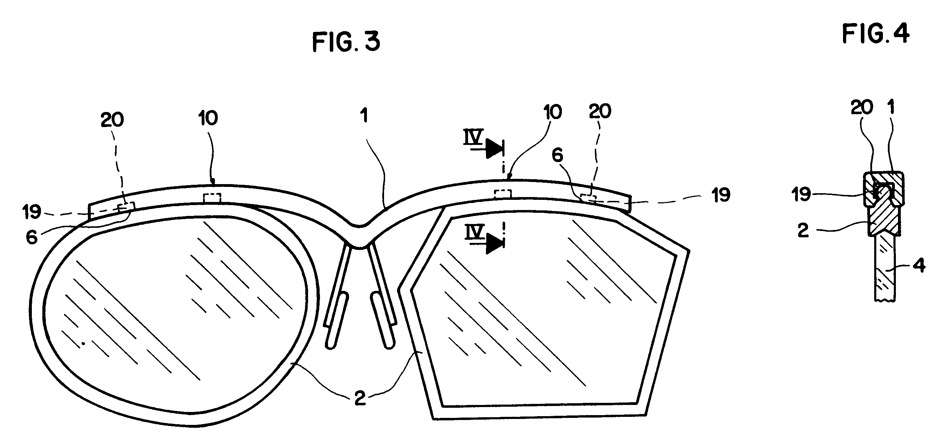

Gemäss Fig. 3 bestehen die ersten Mittel 6 der beiden Randfassungen 2 aus Zapfen 19 und die zweiten Mittel 10 des Brillengestells 1 aus entsprechenden Oeffnungen 20 zur Aufnahme der Zapfen 19 zum austauschbaren Befestigen der beiden Randfassungen 2 am Brillengestell 1. Der Zapfen 19 weist, wie aus Fig. 4 ersichtlich ist, einen kugeligen Kopf auf, so dass, da die Oeffnung 20 eine Verengung am Einlass aufweist, der Zapfen 19 in der Oeffnung 20 einschnappt und gehalten ist.

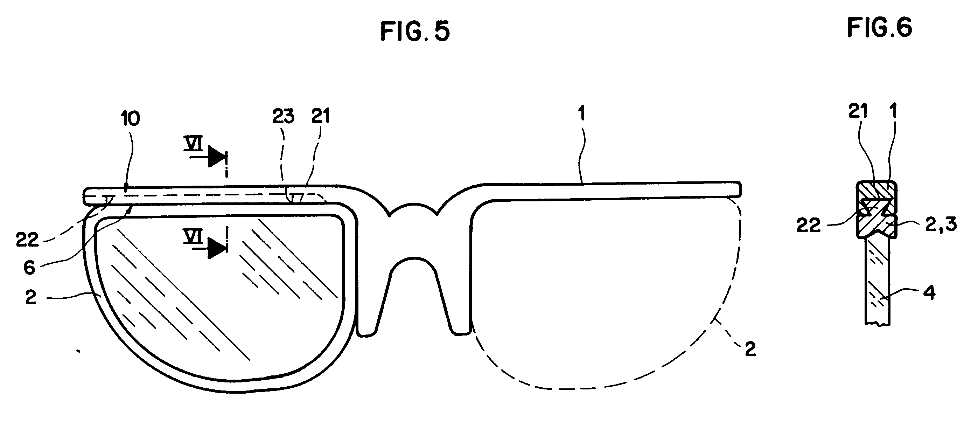

Das Brillengestell 1 weist gemäss Fig. 5 und Fig. 6 an der den beiden Randfassungen 2 zugewandten Seite als zweite Mittel 10 je eine Längsnut 21 auf, in welche die ersten Mittel 6 der beiden Randfassungen 2, die als Profilleisten 22 am oberen Rand der beiden Randfassungen 2 ausgebildet sind, einschiebbar sind. Ein Anschlag 23 dient als Begrenzung der Einschiebtiefe der beiden Randfassungen 2 ins Brillengestell 1.

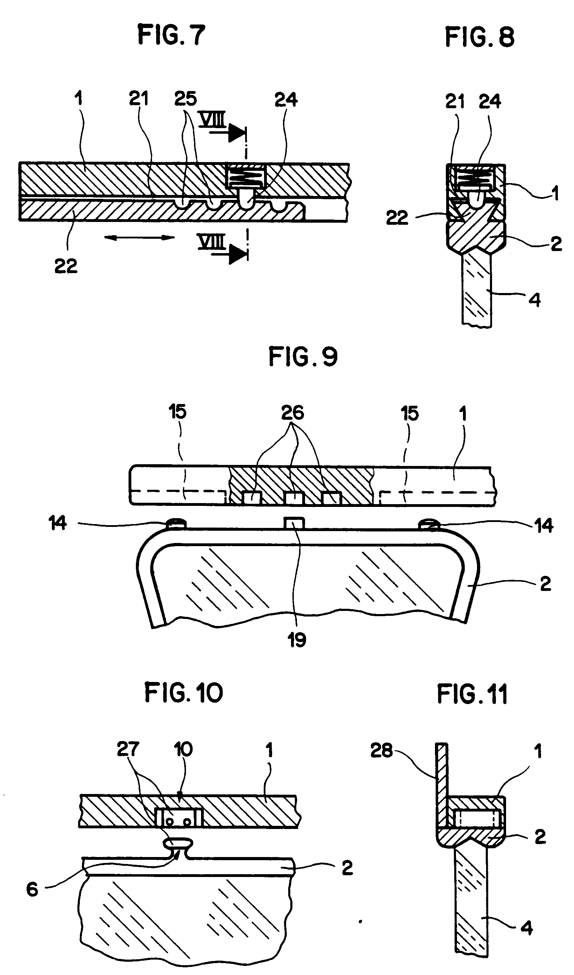

Anstelle eines festen Anschlages 23 nach Fig. 5 ist das Brillengestell 1, wie aus Fig. 7 und Fig. 8 ersichtlich ist, in seiner Längsnut 21 mit einer bekannten federnd abgestützten Halbkugel 24 ausgerüstet. Die Profilleiste 22, die an den beiden Randfassungen 2 vorhanden ist, ist mit hintereinander angeordneten Vertiefungen 25 versehen. Beim Einschieben der Randfassung 2 in das Brillengestell 1 rastet die Halbkugel 24 in die gerade gegenüberstehende Vertiefung 25 ein und hält die Randfassung 2 in der momentanen Stellung fest. Durch diese Einrichtung lässt sich die Randfassung 2 mehr oder weniger tief in das Brillengestell einschieben, wodurch der gegenseitige Abstand der beiden Randfassungen 2 voneinander wählbar ist.

In Fig. 9 ist eine Variante zum Verstellen des gegenseitigen Abstandes der beiden Randfassungen 2 dargestellt. Hierbei dient zum Befestigen der Randfassung 2 am Brillengestell 1 je ein Zapfen 19. Am Brillengestell 1 sind nebeneinander mehrere Oeffnungen 26 eingelassen, in die der Zapfen 19 wahlweise einsteckbar ist. Beidseits des Zapfens 19 jeder Randfassung 2 und 3 ist ein Nocken 14 angebracht, der in eine Ausnehmung 15 am Brillengestell 1 passt. Diese Nocken 14 und die Ausnehmung 15 dienen als Verdrehsicherung der Randfassungen 2 und als Sicherung gegen Verwechslung der Randfassungen 2, wie es bereits zu Fig. 1 beschrieben wurde.

Wie in Fig. 10 dargestellt ist, lassen sich die ersten Mittel 6 und die zweiten Mittel 10 in bekannter Weise je aus einem Teil eines oder mehrerer Druckknöpfe 27 ausbilden. Die Teile der Druckknöpfe 27 lassen sich so auf den Randfassungen 2 und am Brillengestell 1 anbringen, dass ein Befestigen der Randfassungen 2 an das Brillengestell von vorne, von unten oder von hinten erfolgen kann.

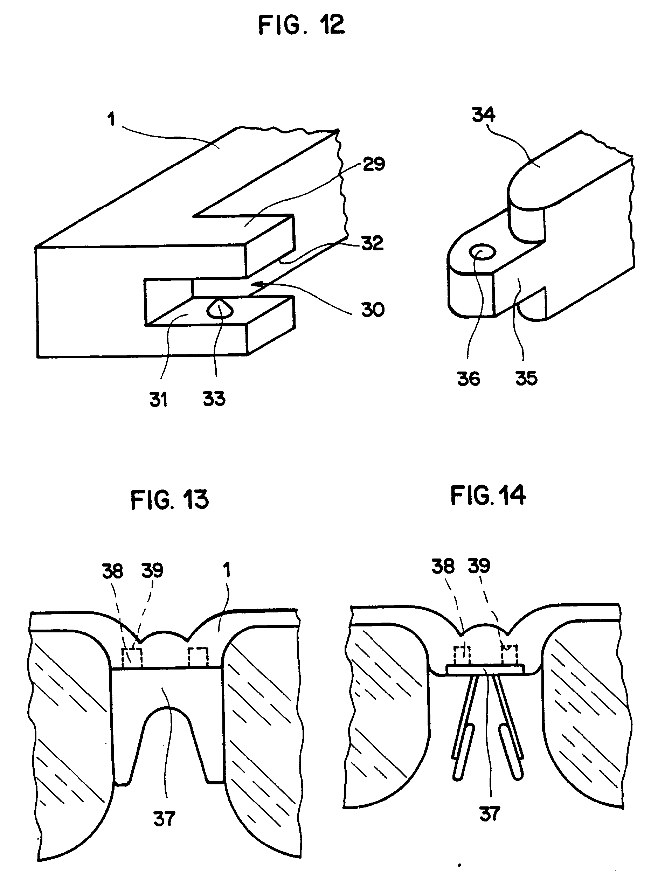

Aus Fig. 11 ist ersichtlich, dass auf das Brillengestell 1 auch Randfassungen 2 mit den entsprechenden Gläsern 4 aufsteckbar sind, die mit einer Blende 28 versehen sind. Mit derartig angebrachten Blenden 28 lässt sich das Brillengestell 1 praktisch vollständig abdecken, wodurch andere Formen erreichbar sind und andere Farben ermöglicht werden.

Die bis hierhin beschriebenen und dargestellten Brillengestelle 1 weisen durchwegs zwei fest angebrachte schwenkbare Bügel und einen Nasenbügel auf.

Eine Variante zum Austauschen der Bügel ist in Fig. 12 dargestellt. Das Brillengestell 1 weist an seinen beiden äusseren Enden je eine abgewinkelte Fortsetzung 29 auf, in welche ein Schlitz 30 eingebracht ist. Die beiden innenliegenden Flächen 31 und 32 dieses Schlitzes 30 sind je mittig mit einer kugelförmigen Erhöhung 33 versehen. Der Bügel 34 ist an seinem mit dem Brillengestell 1 zu verbindenden Ende mit einer Lasche 35 versehen, die in den Schlitz 30 einbringbar ist. Die Lasche 35 ist beidseits mit Vertiefungen 36 ausgerüstet, in die im montierten Zustand die kugelförmigen Erhöhungen 33 eingreifen, wodurch eine gelenkig lösbare Verbindung zwischen austauschbaren Bügeln 34 und Brillengestell 1 erreicht wird.

Es ist denkbar, dass am Brillengestell 1 eine einzige Randfassung eingesetzt wird, die sich über die ganze Breite des Brillengestells 1 erstreckt. Diese Randfassung kann zwei einzelne Gläser tragen oder ein sich über die ganze Breite der Brille erstreckendes Glas enthalten. Das Einsetzen dieser einen Randfassung ins Brillengestell 1 erfolgt über gleiche Mittel 6 und 10, wie bei den einzelnen Randfassungen 2, wie bereits beschrieben wurde. Dabei kann die Funktion des Nasenbügels durch die Randfassung übernommen werden. Es ist auch möglich, dass zwei Randfassungen 2 mit je einem Glas 4 die Funktion des Nasenbügels am Brillengestell übernehmen.

Aus diesem Grunde ist eine weitere Variante einer Brille vorgesehen, die in Fig. 13 und 14 dargestellt ist. Hierbei besteht zwischen Brillengestell 1 und Nasenbügel 37 eine lösbare Verbindung, die als Zapfen 38 und entsprechenden Löchern 39 ausgeführt sein kann. Dadurch lässt sich der Nasenbügel 37 ohne weiteres Austauschen oder bei Nichtgebrauch entfernen.

Durch eine praktisch beliebige Kombination der vorhergehend im einzelnen beschriebenen Teile lässt sich die erstrebte sehr grosse Vielfalt von Variationen einer Brille erhalten.

## Patentansprüche

1. Brille mit einem Brillengestell und mindestens einem mit wenigstens einer teilweisen Randfassung versehenen Glas, dadurch gekennzeichnet, dass die Randfassung (2) erste Mittel (6) und das Brillengestell (1) zweite Mittel (10) die mit den ersten Mittel eine lösbare Verbindung bilden, zum austauschbaren Anordnen der Randfassung (2) am Brillengestell (1) aufweist.

2. Brille nach Anspruch 1, gekennzeichnet durch eine dual vertauschte Anordnung der ersten Mittel (6) und der zweiten Mittel (10).

3. Brille nach Anspruch 1 oder 2, dadurch gekennzeichnet, dass die ersten Mittel (6) einen von der Randfassung (2) abstehenden Gleitteil (8) umfassen und dass die zweiten Mittel (10) eine Nut (12) mit einer Passform zum Aufnehmen der ersten Mittel (6) aufweisen.

4. Brille nach Anspruch 1 oder 2, dadurch gekennzeichnet, dass die ersten Mittel (6) wenigstens einen von der Randfassung (2) abstehenden Einpassteil (19) und die zweiten Mittel wenigstens eine zum Aufnehmen des Einpassteiles (19) bestimmte Einpassöffnung (20) aufweisen.

5. Brille nach einem der Ansprüche 3 oder 4, dadurch gekennzeichnet, dass die ersten Mittel (6) und die zweiten Mittel (10) erste und zweite Organe aufweisen, die als Schnappvorrichtung (16) zusammenwirken, und zum Arretieren der in das Brillengestell (1) eingesetzten Randfassung (2) bestimmt sind.

6. Brille nach Anspruch 3, dadurch gekennzeichnet, dass die Randfassung (2) seitlich in das Brillengestell (1) einschiebbar ist und dass ein verstellbares Anschlagselement (23) zum Begrenzen der Einschubweite vorhanden ist.

7. Brille nach Anspruch 4, dadurch gekennzeichnet, dass längs des Brillengestelles (1) im Bereiche wenigstens des einen Auges eines Brillenträgers mehrere Einpassöffnungen (26) zum Anpassen des Anordnungsortes der Randfassung (2) an das Auge vorhanden sind.

8. Brille nach Anspruch 1, dadurch gekennzeichnet, dass die ersten Mittel (6) und die zweiten Mittel (10) je einen Teil eines Druckknopfes (27) umfassen.

9. Brille nach einem der Ansprüche 3, 4 oder 8, dadurch gekennzeichnet, dass die ersten Mittel (6) und die zweiten Mittel (10) im weiteren Elemente (14) umfassen, die zum Verhindern einer Verdrehung der am Brillengestell (1) eingesetzten Randfassung (2) bestimmt sind.

10. Brille nach einem der Ansprüche 1 bis 8, dadurch gekennzeichnet, dass die ersten Mittel (6) und die zweiten Mittel (10) im weiteren Ausbildungen aufweisen, die ein Vertauschen von linken und rechten Randfassungen (6) ausschliessen.

11. Brille nach einem der Ansprüche 1 bis 10, dadurch gekennzeichnet, dass zwischen Brillengestell (1) und Bügel (34) eine leicht lösbare Verbindung zum Austauschen der Bügel (34) angeordnet ist und dass das Brillengestell (1) und Nasenbügel (37) zum Austauschen des Nasenbügels (37) leicht lösbar miteinander verbunden sind.

## Claims

1. A pair of spectacles with a spectacle frame and at least one lens provided with at least a partial lens mount, characterized in that the lens mount (2) has first means (6), and the spectacle frame (1) has second means (10) which form a detachable connection with the first means, for detachably attaching the lens mount (2) to the spectacle frame (1).

2. The pair of spectacles according to claim 1, characterized by the reciprocally interchangeable arrangement of the first means (6) and of the second means (10).

3. The pair of spectacles according to claim 1 or 2, characterized in that the first means (6) comprise an insertable element (8) projecting upwards from the lens mount (2), and in that the second means (10) have a groove (12) whose shape is adapted to accommodate the first means (6).

4. The pair of spectacles according to claim 1 or 2, characterized in that the first means (6) have at least one fit-in element (19) projecting upward from the lens mount (2) and in that the second means have at least one opening (20) intended to accommodate the fit-in element (19).

5. The pair of spectacles according to one of the claims 3 or 4, characterized in that the first means (6) and the second means (10) have first and second elements which co-operate together as a snap device (16), and are intended to retain the lens mount (2) inserted in the spectacle frame (1).

6. The pair of spectacles according to claim 3, characterized in that the lens mount (2) can be inserted into the spectacle frame (1) from the side, and in that there is an adjustable stop element (23) to restrict the depth of insertion.

7. The pair of spectacles according to claim 4, characterized in that along the spectacle frame (1), in the region of at least one of the eyes of the wearer, there are a plurality of openings (26) to adapt the position of the lens mount (2) to the eye.

8. The pair of spectacles according to claim 1, characterized in that the first means (6) and the second means (10) each comprise one part of a press button (27).

9. The pair of spectacles according to one of the claims 3, 4, or 8, characterized in that the first means (6) and the second means (10) also comprise elements (14) which are intended to prevent the lens mount (2) inserted in the spectacle frame (1) from twisting.

10. The pair of spectacles according to one of the claims 1 to 8, characterized in that the first means (6) and the second means (10) also have formations which exclude a confusion of left and right lens mounts (6).

11. The pair of spectacles according to one of the claims 1 to 10, characterized in that disposed between spectacle frame (1) and arms (34) is an easily detachable connection for exchanging the arms (34), and in that the spectacle frame (1) and the nose bridge (37) are connected to each other in an easily detachable way to exchange the nose bridge (37).

## Revendications

1. Lunettes comportant une monture de lunettes et au minimum un verre pourvu au minimum d'un cadre partiel caractérisé en ce que le cadre (2) présente de premiers moyens (6) et la monture de lunettes (1) les seconds moyens (10) qui constituent avec les premiers moyens une liaison desserrable pour le montage interchangeable du cadre (2) à la monture de lunettes (1).

2. Lunettes selon la revendication 1 caractérisées par une disposition doublement intervertie des premiers moyens (6) et des seconds moyens (10).

3. Lunettes selon la revendication 1 ou 2 caractérisées en ce que les premiers moyens (6) entourent une pièce de glissement (8) écartée du cadre (2) et que les seconds moyens (10) présentent une rainure (12) d'une forme d'ajustage permettant de recevoir les premiers moyens (6).

4. Lunettes selon la revendication 1 ou 2 caractérisées en ce que les premiers moyens (6) présentent au moins une pièce d'ajustage (19) écartée du cadre (2) et les seconds moyens au minimum un orifice d'ajustage (20) destiné à recevoir la pièce d'ajustage (19).

5. Lunettes selon une des revendications 3 ou 4 caractérisées en ce que les premiers moyens (6) et les seconds moyens (10) présentent un premier et un second organe qui agissent de façon combinée comme un dispositif d'encliquetage (16) et sont destinés à bloquer le cadre (2) placé dans la monture de lunettes (1).

6. Lunettes selon la revendication 3 caractérisées en ce que le cadre (2) est coulissable latéralement dans la monture de lunettes (1) et qu'un élément de butée réglable (23) existe pour la limitation de la course d'insertion.

7. Lunettes selon la revendication 4 caractérisées en ce que le long de la monture de lunettes (1) existe dans le domaine au minimum d'un oeil d'un porteur de lunettes plusieurs orifices d'ajustage 27 pour l'adaptation de la position du cadre (2) à l'oeil.

8. Lunettes selon la revendication 1 caractérisées en ce que les premiers moyens (6) et les seconds moyens (10) comprennent respectivement une partie d'un bouton pression (27).

9. Lunettes selon l'une des revendications 3, 4 ou 8 caractérisées en ce que les premiers moyens (6) et les seconds moyens (10) comprennent d'autres éléments (14) qui sont destinés à éviter une rotation du cadre (2) disposé sur la monture de lunettes (1).

10. Lunettes selon l'une des revendications 1 à 8 caractérisées en ce que les premiers moyens (6) et les seconds moyens (10) présentent d'autre part des configurations qui excluent un intervertissement des cadres gauche et droit (6).

11. Lunettes selon l'une des revendications 1 à 10 caractérisées en ce que est disposée, entre la monture de lunettes (1) et le pont ou les palquettes (34), une liaison aisément démontable pour l'échange du pont ou des plaquettes (34) et que la monture de lunettes (1) et le pont ou les plaquettes (37) sont reliés de façon aisément démontable entre eux pour l'échange du pont ou des plaquettes (37)
